# FASCICULE DE BREVET EUROPEEN

(11) **EP 2 000 343 B1**
(45) Date de publication et mention de la délivrance du brevet: **25.01.2012**
(21) Numéro de dépôt: 08300210.5
(22) Date de dépôt: 20.05.2008
(51) Int. Cl.: B60J 10/08, B60J 5/10, B60J 1/18, B60J 10/02, B62D 65/08

(54) **Montant de porte de véhicule automobile à encombrement réduit**
Türpfosten eines Kraftfahrzeugs mit reduziertem Platzbedarf
Upright of an automobile door with reduced bulk

(30) Priorité: 04.06.2007 FR 0703983
(43) Date de publication de la demande: 10.12.2008
(73) Titulaire: Renault s.a.s., 92100 Boulogne Billancourt (FR)
(72) Inventeur: Sanguiol, Sylvie, 92360, MEUDON LA FORET (FR); Valentin, Anthony, 78340, LES CLAYES SOUS BOIS (FR)

(56) Documents cités:
- EP-A- 0 196 968
- FR-A- 2 690 404
- FR-A- 2 764 551
- JP-A- 60 226 322
- US-A- 2 938 249
- US-A- 4 880 267

## Description

L'invention concerne un montant pour porte de véhicule automobile comprenant un dispositif d'étanchéité pour recevoir une vitre ouvrante, particulièrement adapté pour monter sur une porte de coffre la lunette arrière d'un véhicule. Elle concerne aussi un véhicule automobile en tant que tel équipé d'un tel montant.

Une solution habituelle de l'état de la technique pour monter une lunette arrière ouvrante sur une porte de coffre consiste à utiliser un montant intermédiaire positionné sur la porte de coffre et adapté pour recevoir la lunette ouvrante. Un tel montant est équipé d'un joint d'étanchéité en forme de U, fixé par chauffage sur une feuillure prévue pour cela sur son contour intérieur orienté du côté de la lunette, qui assure ainsi l'étanchéité de la lunette dans sa position fermée. Cet ensemble comprend de plus un équilibreur, fixé d'une part sur le montant de la porte de coffre et d'autre part sur la lunette, dont la fonction est la mise en oeuvre de l'ouverture et la fermeture de la lunette. Cet agencement présente l'inconvénient d'un grand encombrement, ce qui réduit la surface vitrée et donc la visibilité vers l'extérieur depuis l'intérieur du véhicule et nuit à l'aspect esthétique perçu depuis l'extérieur. Pour rendre cet aspect esthétique le plus attractif possible, il est commun de rendre la lunette non transparente au niveau de sa surface périphérique qui recouvre le montant de porte, par exemple par un procédé d'émaillage qui lui donne un aspect noir opaque. Toutefois, un tel procédé est cher et le résultat peu convenable. Dans ces solutions existantes, la dimension de la surface émaillée nécessaire est importante, ce qui représente un aspect peu attrayant et réduit grandement la visibilité depuis l'intérieur du véhicule.

Le document FR-A-2764551 divulgue un véhicule selon le préambule de la revendication 1.

Les documents FR2690404 et US2938249 proposent un montant comportant une gorge dans laquelle un joint d'étanchéité est monté.

Le but de l'invention est de proposer une solution de vitre ouvrante pour véhicule automobile dans laquelle le montant de porte occupe un espace restreint pour améliorer la visibilité et l'esthétique.

L'invention propose un selon le préambule de la revendication 1, caractérisé en ce que le montant comprend une gorge dans laquelle le joint d'étanchéité est monté.

Selon un mode d'exécution, le joint d'étanchéité peut être monté dans la gorge par une liaison de type clipsage. Pour cela, il peut comprendre un moyen de liaison avec des lèvres ou harpons permettant une insertion facile dans la gorge et un retrait difficile. De plus, il peut présenter un partie tubulaire au-dessus du moyen de liaison, qui se place hors de la gorge et remplit la fonction d'étanchéité.

La gorge peut être positionnée au voisinage de son extrémité destinée à une orientation vers une vitre.

Le montant peut en outre comprendre une partie creuse pour recevoir un équilibreur pour actionner l'ouverture ou la fermeture d'une vitre.

Le montant peut comprendre deux parties associées formant un panneau extérieur et une doublure intérieure, la gorge étant aménagée dans le panneau extérieur.

Selon l'invention, le montant est monté sur la porte de coffre, et le véhicule comprend une lunette arrière ouvrante venant en appui sur un joint d'étanchéité monté dans une gorge du montant en position fermée. La lunette peut être actionnable par un équilibreur fixé dans la zone des angles supérieurs du montant de manière pivotante, se logeant dans des logements en creux aménagés dans les parties verticales du montant et recouverts par les bords de la lunette lorsque la lunette est en position fermée.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective partielle d'une partie d'un montant de porte de coffre selon un mode d'exécution de l'invention ;
la figure 2 représente une vue en coupe II-II selon un plan transversal du montant de porte de coffre selon le mode d'exécution de l'invention.

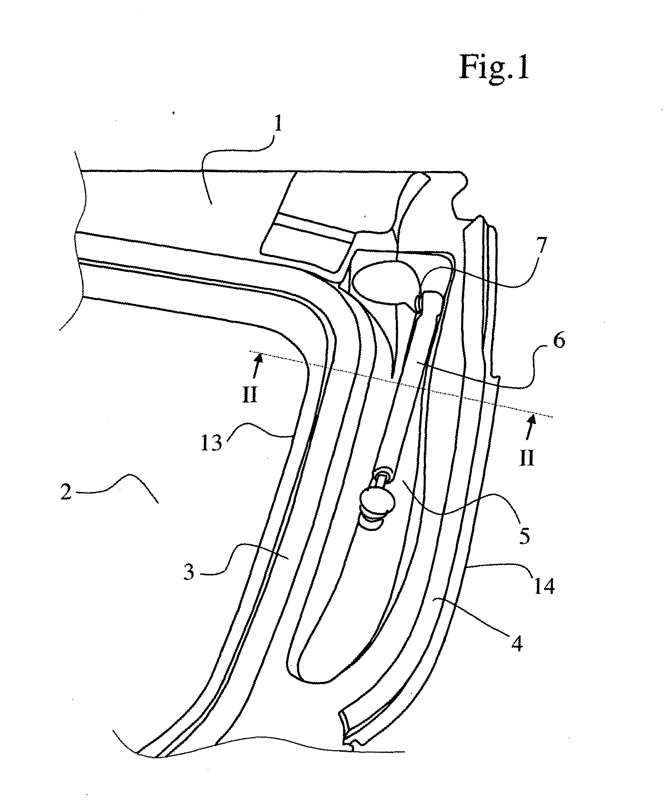

La figure 1 représente une vue partielle de la face destinée à une orientation vers l'extérieur d'un véhicule automobile sur lequel elle serait montée de la partie supérieure droite d'un montant 1 pour porte de coffre. Ce montant 1 délimite un espace intérieur destiné à recevoir une lunette arrière 2. Le montant 1 comprend un joint d'étanchéité 3 sur toute sa circonférence à proximité de sa première extrémité 13 dans la zone frontière avec la surface vitrée 2. Il comprend de plus un second joint d'étanchéité 4 sur sa périphérie au niveau de sa seconde extrémité 14.

Le montant 1 présente de plus une zone en creux 5 emboutie formant un logement pour recevoir un équilibreur 6, fixé dans l'angle supérieur du montant 1 par une liaison pivotante 7 de type rotule et s'étendant vers le bas dans la partie sensiblement verticale du montant. Sa seconde extrémité inférieure est fixée à la vitre 2. Ainsi, le pivotement de l'équilibreur 6 permet l'ouverture de la vitre.

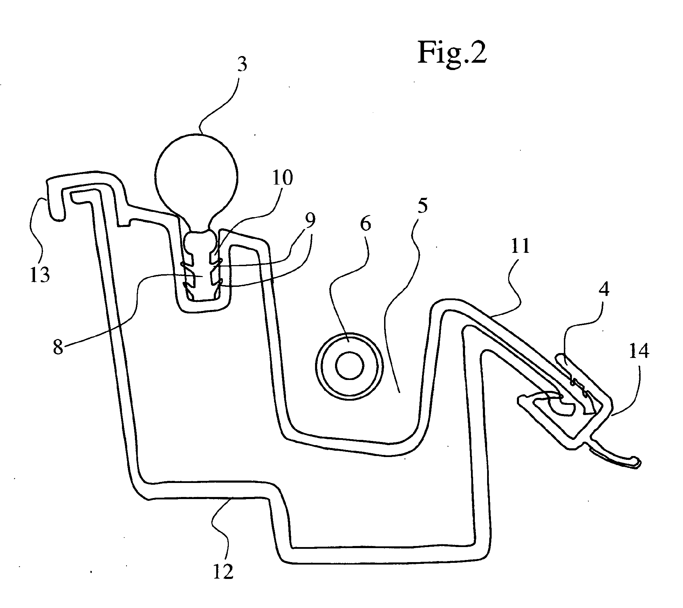

La figure 2 illustre cet agencement en coupe par un plan transverse. Le montant 1 est formé par la réunion de deux tôles, la première destinée à une orientation vers l'extérieur du véhicule automobile formant le panneau extérieur 11 et la seconde formant une doublure intérieure 12. Ces deux tôles 11, 12 sont liées sur leurs deux extrémités. Le panneau extérieur 11 présente une gorge 10 dans sa zone proche de l'extrémité 13 orientée vers la vitre pour recevoir le premier joint d'étanchéité 3.

Ce joint d'étanchéité 3 présente une section tubulaire hors de la gorge, sur laquelle vient en appui la vitre en position fermée pour obtenir l'étanchéité. Ce joint présente de plus une partie plane inférieure 8 comprenant des lèvres ou harpons 9, en forme de V, permettant son insertion facile dans la gorge 10 mais résistant à son mouvement de retrait, assurant ainsi un positionnement sécurisé du joint. Le joint 3 est ainsi clipsé dans la gorge 10 par l'intermédiaire de ce moyen de liaison 8.

Le panneau extérieur 11 du montant 1 comprend de plus un logement en creux 5 permettant l'intégration de l'équilibreur 6. Enfin, il se termine par le second joint 4. Cet agencement permet à la lunette, non représentée, de venir en appui sur les deux joints 3, 4 du montant 1 et de recouvrir l'équilibreur. Sur toute cette zone de superposition de la lunette sur le montant 1, le verre de la lunette est de préférence non transparent afin de cacher ces éléments fonctionnels peu esthétiques. Pour cela, le verre peut être par exemple émaillé.

Le joint tubulaire 3 a été représenté avec un certain mode de fixation par clipsage dans la gorge 10 mais toute autre fixation équivalente dans la gorge peut être envisagée. L'intérêt de ce mode de fixation du joint d'étanchéité est de supprimer la feuillure qui était nécessaire auparavant au niveau de la première extrémité 13 du montant 1 de porte pour la fixation du joint. Une telle feuillure occupait une surface importante et augmentait l'encombrement du montant de porte.

De plus, le concept de l'invention a été illustré pour une lunette ouvrante d'un coffre de véhicule mais il pourrait être implémenté sur toute autre vitre ouvrante d'un véhicule, quelque soit le type de vitre, en verre ou matériau plastique.

Finalement, la solution atteint bien le but recherché et présente les avantages suivants :
- comme le joint d'étanchéité 3 est fixé dans une gorge du montant de porte, la dimension globale du panneau est réduite, notamment sa distance entre ses deux extrémités 13, 14 ;
- ainsi, la surface vitrée peut être augmentée, la visibilité améliorée et la zone émaillée réduite.

## Revendications

1. Véhicule automobile comprenant un montant (1) formant une partie d'une porte de véhicule automobile, monté sur la porte de coffre et comprenant au moins un joint d'étanchéité (3), et le vehicule automobile comprenant une lunette (2) arrière ouvrante venant en appui sur le joint d'étanchéité (3) en position fermée **caractérisé en ce que** le montant (1) comprend une gorge (10) dans laquelle le joint d'étanchéité (3) est monté.

2. Véhicule automobile selon la revendication 1, **caractérisé en ce que** le joint d'étanchéité (3) est monté dans la gorge (10) par une liaison de type clipsage.

3. Véhicule automobile selon la revendication 2, **caractérisé en ce que** le joint d'étanchéité (3) comprend un moyen de liaison (8) avec des lèvres ou harpons (9) permettant une insertion facile dans la gorge (10) et un retrait difficile.

4. Véhicule automobile selon la revendication 3, **caractérisé en ce que** le joint d'étanchéité (3) présente une partie tubulaire au-dessus du moyen de liaison, qui se place hors de la gorge (10) et remplit la fonction d'étanchéité.

5. Véhicule automobile selon l'une des revendications précédentes, **caractérisé en ce que** la gorge (10) est positionnée au voisinage de l'extrémité (13) du montant (1) destinée à une orientation vers une vitre (2).

6. Véhicule automobile selon l'une des revendications précédentes, **caractérisé en ce que** le montant (1) comprend en outre une partie creuse (5) pour recevoir un équilibreur (6) pour actionner l'ouverture ou la fermeture d'une vitre (2).

7. Véhicule automobile selon l'une des revendications précédentes, **caractérisé en ce que** le montant (1) comprend un joint supplémentaire (4) positionné vers son extrémité opposée au positionnement prévu pour la vitre (2).

8. Véhicule automobile selon l'une des revendications précédentes, **caractérisé en ce que** le montant (1) comprend deux parties associées (11, 12) formant un panneau extérieur (11) et une doublure intérieure (12), la gorge (10) étant aménagée dans le panneau extérieur (11).

9. Véhicule automobile selon l'une des revendications précédentes, **caractérisé en ce que** la lunette (2) est actionnable par un équilibreur (6) fixé dans la zone des angles supérieurs du montant (1) de manière pivotante, se logeant dans des logements en creux (5) aménagés dans les parties verticales du montant (1) et recouverts par les bords de la lunette (2) lorsque la lunette (2) est en position fermée.

## Claims

1. Motor vehicle comprising a post (1) forming a part of a motor vehicle door, said post being mounted on the tailgate and comprising at least one seal (3), and the motor vehicle comprising an opening backlight (2) bearing on the seal (3) in the closed position, **characterized in that** the post (1) comprises a groove (10) inside which the seal (3) is mounted.

2. Motor vehicle according to Claim 1, **characterized in that** the seal (3) is mounted in the groove (10) by a clip-type connection means.

3. Motor vehicle according to Claim 2, **characterized in that** the seal (3) comprises a connection means (8) with lips or hooks (9) allowing the seal (3) to be inserted easily into the groove (10) and making it difficult to remove it.

4. Motor vehicle according to Claim 3, **characterized in that** the seal (3) has a tubular part above the connection means, which is situated outside the groove (10) and fulfils the sealing function.

5. Motor vehicle according to one of the preceding claims, **characterized in that** the groove (10) is positioned in the vicinity of that end (13) of the post (1) which is intended to face towards a window (2).

6. Motor vehicle according to one of the preceding claims, **characterized in that** the post (1) also comprises a hollow part (5) for receiving a gas strut (6) for actuating the opening or closing of a window (2).

7. Motor vehicle according to one of the preceding claims, **characterized in that** the post (1) comprises an additional seal (4) positioned towards that end of the post (1) which is opposite the position provided for the window (2).

8. Motor vehicle according to one of the preceding claims, **characterized in that** the post (1) comprises two associated parts (11, 12) forming an outer panel (11) and an inner lining (12), the groove (10) being formed in the outer panel (11).

9. Motor vehicle according to one of the preceding claims, **characterized in that** the backlight (2) can be actuated by a gas strut (6) fixed in the region of the upper corners of the post (1) so as to pivot, being housed in hollow housings (5) formed in the vertical parts of the post (1) and covered by the edges of the backlight (2) when the backlight (2) is in the closed position.

## Patentansprüche

1. Kraftfahrzeug, umfassend einen Pfosten (1), der einen Teil einer Kraftfahrzeugtür bildet, an der Kofferraumtür angebracht ist und mindestens eine Dichtung (3) umfasst, und wobei das Kraftfahrzeug eine zu öffnende Heckscheibe (2) umfasst, die in der geschlossenen Position an der Dichtung (3) anliegt, **dadurch gekennzeichnet, dass** der Pfosten (1) eine Nut (10) umfasst, in der die Dichtung (3) angebracht ist.

2. Kraftfahrzeug nach Anspruch 1, **dadurch gekennzeichnet, dass** die Dichtung (3) durch eine Rastverbindung in der Nut (10) angebracht ist.

3. Kraftfahrzeug nach Anspruch 2, **dadurch gekennzeichnet, dass** die Dichtung (3) ein Verbindungsmittel (8) mit Lippen oder Haken (9) umfasst, das ein leichtes Einführen in die Nut (10) und ein schwieriges Herausziehen gestattet.

4. Kraftfahrzeug nach Anspruch 3, **dadurch gekennzeichnet, dass** die Dichtung (3) einen röhrenförmigen Teil über dem Verbindungsmittel aufweist, der außerhalb der Nut (10) platziert ist und die Dichtungsfunktion erfüllt.

5. Kraftfahrzeug nach einem der vorhergehenden Ansprüche, **dadurch gekennzeichnet, dass** die Nut (10) in der Nähe des Endes (13) des Pfostens (1) positioniert ist, das zu einem Fenster (2) ausgerichtet sein soll.

6. Kraftfahrzeug nach einem der vorhergehenden Ansprüche, **dadurch gekennzeichnet, dass** der Pfosten (1) des Weiteren einen hohlen Teil (5) zur Aufnahme einer Ausgleichsvorrichtung (6) zum Bewirken des Öffnens oder des Schließens eines Fensters (2) umfasst.

7. Kraftfahrzeug nach einem der vorhergehenden Ansprüche, **dadurch gekennzeichnet, dass** der Pfosten (1) eine zusätzliche Dichtung (4) umfasst, die zu seinem Ende hin gegenüber der vorherigen Positionierung für das Fenster (2) positioniert ist.

8. Kraftfahrzeug nach einem der vorhergehenden Ansprüche, **dadurch gekennzeichnet, dass** der Pfosten (1) zwei zugehörige Teile (11, 12) umfasst, die eine Außenverkleidung (11) und eine Innenauskleidung (12) bilden, wobei die Nut (10) in der Außenverkleidung (11) ausgebildet ist.

9. Kraftfahrzeug nach einem der vorhergehenden Ansprüche, **dadurch gekennzeichnet, dass** das Fenster (2) durch eine Ausgleichsvorrichtung (6) betätigbar ist, die im Bereich der oberen Ecken des Pfostens (1) schwenkbar befestigt ist, in in vertikalen Teilen des Pfostens (1) ausgebildeten hohlen Aufnahmen (5) untergebracht ist und durch Ränder des Fensters (2) bedeckt wird, wenn sich das Fenster (2) in geschlossener Position befindet.
